Europäisches Patentamt

European Patent Office

Office européen des brevets

(19)

(11) Publication number: **0 333 506**
A2

# (12) EUROPEAN PATENT APPLICATION

(21) Application number: **89302662.5**

(22) Date of filing: **17.03.89**

(51) Int. Cl.⁴: **D 21 C 9/00**
D 06 M 11/00, B 27 K 3/16,
C 09 K 21/00

(30) Priority: **18.03.88 JP 66149/88**

(43) Date of publication of application:
**20.09.89 Bulletin 89/38**

(84) Designated Contracting States: **DE FR GB**

(71) Applicant: **Nishimoto, Kouichi**
**Momoyama Nagaoka Etchu Minamicho 53 Fushimiku**
**Kyotoshi Kyoto (JP)**

(72) Inventor: **Nishimoto, Kouichi**
**Momoyama Nagaoka Etchu Minamicho 53 Fushimiku**
**Kyotoshi Kyoto (JP)**

(74) Representative: **Pearce, Anthony Richmond et al**
**MARKS & CLERK Alpha Tower Suffolk Street**
**Queensway Birmingham B1 1TT (GB)**

(54) Flame retardant vegetable fibre material and the process of the same.

(57) A flame retardant fibre material is produced by immersing vegetable fibre into a first inorganic compound solution and then into a second inorganic compound solution. Both solutions enter into the gaps between the vegetable fibres and contact each other to produce an insoluble and incombustible inorganic compound which is deposited on the fibres in the gaps therebetween. The thus deposited inorganic compound imparts flame retardant properties to the vegetable fibre.

EP 0 333 506 A2

Bundesdruckerei Berlin

## Description

### FLAME RETARDANT VEGETABLE FIBRE MATERIAL AND PROCESS FOR THE PRODUCTION THEREOF

### BACKGROUND OF THE INVENTION AND RELATED ART

This invention relates to a flame retardant vegetable fibre material which has been developed by a novel treatment of an inherently inflammable fibre material, such as wood pulp, cotton fibre etc. The invention also relates to a process for the production of such a flame retardant vegetable fibre material which is relatively easy to perform on an industrial scale. The flame retardant vegetable material of the present invention has application in a wide variety of technologies, eg for use as a filler for building construction materials in the place of asbestos, rock or mineral fibres and glass wool, for heat insulating and noise absorbing applications, for flame-resistant sheets or webs, e.g of paper, for use in brake linings for automobiles etc.

It is well known that asbestos and other mineral or rock fibres have been widely and generally used in the building industry because of their incombustibility, heat resistance, and thermal and noise insulation properties. Such fibres have also been utilised for flame-resistant sheets or webs as well as in the brake linings of automobiles. Recently, however, much research work has been conducted into developing new and safe fibre materials because of the risk that inhalation of asbestos or rock fibres suspended in the air can cause lung cancer.

In general, mineral fibres other than asbestos and rock fibres are incombustible and have heat resistance, but do not meet the conditions of low density, and high thermal and noise insulation required for building materials. Additionally, such fibres are not soft to the touch and are not permeable and light weight, these properties being required for a flame-resistant paper. The use of mineral fibres apart from asbestos and rock fibre in brake linings for automobiles does not always achieve satisfactory results as far as kinetic energy loadings are concerned. As a result of the above, a fibre satisfying all of the above requirements is not to be found amongst the presently existing mineral fibres.

It is an object of the present invention to obviate or mitigate the above disadvantages.

According to one aspect of the present invention, there is provided a flame retardant fibre material comprising vegetable fibres and an insoluble and incombustible inorganic compound which is deposited on the fibres so as to be disposed in the gaps between the fibres.

According to another aspect of the present invention, there is provided a process for the production of a flame retardant fibre material, comprising the step of depositing an insoluble and incombustible inorganic compound on vegetable fibres so that such compound is disposed in the gaps between the fibres.

Preferably, said insoluble and incombustible inorganic compound is one which is produced by mutual contact between a solution or dispersion of a first inorganic compound and a solution or dispersion of a second inorganic compound.

In one embodiment, the first and second inorganic compounds are dissolved in respective solvents and the resultant solutions, when mixed, cause the first and second inorganic compounds to react to produce the insoluble and incombustible inorganic compound.

In another embodiment, first and second colloidal dispersions are employed which produce insoluble and incombustible inorganic compounds by mutual contact.

It is preferred for the solutions and/or dispersions to be introduced into the gaps between the vegetable fibres so that the inorganic compound is deposited in the gaps between the fibres. Preferably, one of the solutions or dispersions is introduced into the gaps between the fibres and then the other solution or dispersion is introduced thereby to effect deposit of the inorganic compound.

Preferably, the solutions or dispersions are aqueous.

In the case where solutions are employed, it is preferred for one of the solutions to be an ionized inorganic compound solution, for example an aqueous solution of magnesium chloride, barium chloride, calcium carbonate, aluminium chloride, aluminium borate or aluminium sulphate, or mixtures thereof, and for the other solution to be an unionized inorganic compound solution such as an aqueous solution of ammonium phosphate, ammonium pyrophosphate, ammonium magnesia, boric acid soda or mixtures thereof.

In the case where colloidal dispersions are employed which produce the insoluble and incombustible organic compounds upon mutual contact, it is preferred for one of the colloidal dispersions to be produced by micronizing barium sulphate or barium phosphate and thereafter dispersing it into water, and it is preferred for the other colloidal dispersion to be prepared by micronizing calcium phosphate or calcium chloride and thereafter dispersing it into water.

As vegetable fibres used in the present invention, the following are applicable:-

Wood pulp (made from both needle-leaved and broad-leaved trees), straw, esparto, bamboo, flax, manila hemp, edgeworthia papyrifera, wikstroemia sikokiana, paper, mulberry, linter etc. These materials can be subjected to mechanical beating or pulping before use. Alternatively, these materials can be chemically pulped in a per se known way. Alternatively, a combination of chemical and mechanical pulping can be employed. A semichemical pulp refined from the above materials may also be employed, as can regenerated pulp from waste or scrap paper.

In general, the gaps between the vegetable fibres occupies several tens percent of the whole fibre cellular tissue, and can be larger in the case of chemical pulping by removal of lignin.

The invention will now be described in further detail with reference to the following examples.

Example 1

A saturated aqueous solution of magnesium chloride is prepared and constitutes an ionized inorganic compound aqueous solution. A saturated aqueous solution of $(NH_4)_2HPO_4$ is prepared as an unionized inorganic compound aqueous solution.

The above-mentioned magnesium chloride solution is heated to a temperature of between 40°C and 60°C. Swollen pulp in a saturated state made by mechanically pulping larch is immersed for 5 to 30 minutes in said heated solution. The pulp is then removed from the solution and squeezed to remove excess aqueous solution. The pulp is then immersed for 10 to 80 minutes in the unionized inorganic compound aqueous solution which is maintained at a temperature of between 40°C and 60°C. During this time, the desired insoluble and incombustible inorganic compound is deposited onto the fibres in the gaps therebetween. The pulp after being washed in water and dried contains the insoluble and incombustible inorganic compound in the gaps between the fibres. The resultant pulp has an increased weight at 50 to 90% in comparison with the original weight as 100 under absolute dry conditions. The inorganic compound imparts flame retardancy to the vegetable fibres since it forms a coating thereon. Such coating is not smooth and even but is a substantially continuous coating in the gaps between the fibres.

A sample of ceiling board having a size of 910 mm x 1820 mm x 12 mm is manufactured from the above-mentioned flame retardant pulp by compressing the pulp in a mould. Subjecting this sample of ceiling board to a flame test at 1000°C for 20 minutes results in the board not catching alight at all, although slight traces of scorching are visible. It will therefore be appreciated that the above mentioned treatment imparts high flame retardant and flame resistant qualities to larch pulp.

Example 2

Example 1 is repeated using the same solutions. However, in this embodiment, instead of using larch pulp, several flakes of cryptomeria pieces swollen with 100 wt% of moisture are used. Immersion in the unionized inorganic compound aqueous solution is effected for 30 minutes before washing with water and drying.

After this treatment, the cryptomeria pieces are hot pressed into a board shape after mixing with a polyimide resin to form a specimen of particle board having a size of 900 mm x 900 mm x 15 mm. Such specimen does not catch fire at all during a fire resistant test at 1000°C for 20 minutes, although it does show a slight trace of scorching and slight deformation.

Example 3

Barium sulphate is micronized to a size of 2μm and dispersed in water to form a first colloidal dispersion. $Ca_3(PO_4)_2$ or $CaCl_2$ is micronized to a size of 2μm and dispersed in water to produce a second colloidal dispersion.

The first colloidal dispersion is heated to 40°C and cotton fibre swollen at 100 wt% moisture is immersed for 10 to 30 minutes in this heated solution. The cotton fibre is then taken out of the solution and squeezed to remove excess liquid. The cotton fibre is then immersed for 10 to 30 minutes in the second colloidal dispersion at a temperature of 40°C before being removed and dried. As a result, the cotton increases its weight at 90% compared with the original weight of 100 under absolute dry conditions. This extra value of 90 is of incombustible quality. On the cotton fibre processed as described above, a piece of lighted cigarette is placed and left until it has burnt away to ashes completely. Almost no trace of scorch is found on the surface, which demonstrates the superior flame resistance imparted by the above processing of the cotton fibre.

As demonstrated in the above examples, the present invention enables a vegetable fibre material with flame retardant and heat resistant qualities to be realised. Additionally, the flame retardant vegetable fibre material, in comparison with mineral fibres, has various and useful features such as being light in weight, soft to the touch and permeable (these two properties being features inherent to vegetable fibres), voluminous, elastic and has high friction endurance, although the treated fibre is somewhat heavier compared to the untreated fibre.

The vegetable fibre material of the present invention operates quite well as a heat insulating or sound proofing material in buildings and is also ideal as a fire protection construction material.

Additionally, when the treated vegetable fibre material is used as a filler in cement board or gypsum board, it has similar flame resistance properties to asbestos and, in addition, is of light weight and is not harmful to health like asbestos and rock fibres.

The pulp of the vegetable fibre of the invention enables flame proof paper to be produced relatively easily by the usual methods and this flame proof paper is superior to asbestos material papers in being soft to the touch and permeable.

Furthermore, the fibre material of the present invention can endure temperatures of greater than 500°C and so can be used as a material for brake linings for automobiles.

Thus, the present invention provides a flame retardant fibre material having the advantageous properties of vegetable and mineral fibres without having the respective defects thereof.

**Claims**

1. A flame retardant fibre material comprising vegetable fibres and an insoluble and incombustible inorganic compound which is deposited on the fibres so as to be disposed in the gaps between the fibres.

2. A material as claimed in claim 1, in which said vegetable fibres comprise pulp.

3. A material as claimed in claim 1, in which the vegetable fibres comprise flakes of smashed or beaten pieces of wood.

4. A process for the production of a flame retardant fibre material, comprising depositing an insoluble and incombustible inorganic compound on vegetable fibres so that such compound is disposed in the gaps between the fibres.

5. A process as claimed in claim 4, wherein the insoluble and incombustible inorganic compound is produced upon mutual contact between a solution or dispersion of a first inorganic compound and a solution or dispersion of a second inorganic compound.

6. A process as claimed in claim 5, in which the insoluble and incombustible inorganic compound is produced by mutual contact between an ionized inorganic compound aqueous solution and an unionized inorganic compound aqueous solution.

7. A process as claimed in claim 6, wherein the vegetable fibre is immersed into one of said aqueous solutions and then into the other of the aqueous solutions.

8. A process as claimed in claim 6 or 7, wherein said ionized inorganic compound aqueous solution contains at least one of magnesium chloride, barium chloride or calcium carbonate, and the unionized inorganic compound aqueous solution includes at least one of ammonium phosphate, ammonium pyrophosphate, ammonium magnesia or boric acid soda.

9. A process as claimed in claim 5, wherein the insoluble and incombustible inorganic compound is produced upon mutual contact of a first colloidal dispersion and a second colloidal dispersion.

10. A process as claimed in claim 9, wherein the first colloidal dispersion comprises water having micronized barium sulphate or barium phosphate powder dispersed therein, and the second colloidal dispersion comprises water having micronized calcium phosphate or calcium chloride powder dispersed therein.